(19) Europäisches Patentamt / European Patent Office / Office européen des brevets

(11) **EP 1 930 155 B1**

(12) **EUROPEAN PATENT SPECIFICATION**

(45) Date of publication and mention
of the grant of the patent:
**12.06.2013 Bulletin 2013/24**

(21) Application number: **06810519.6**

(22) Date of filing: **25.09.2006**

(51) Int Cl.:
**B32B 7/12** (2006.01)          **B32B 27/08** (2006.01)

(86) International application number:
**PCT/JP2006/318951**

(87) International publication number:
**WO 2007/034943 (29.03.2007 Gazette 2007/13)**

(54) **GAS BARRIER LAMINATE AND LAMINATED PRODUCT**

GASSPERRLAMINAT UND VERBUNDPRODUKT

STRATIFIÉ FAISANT BARRIÈRE AUX GAZ ET PRODUIT STRATIFIÉ

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **26.09.2005 JP 2005277925
02.08.2006 JP 2006211068**

(43) Date of publication of application:
**11.06.2008 Bulletin 2008/24**

(73) Proprietors:
• **UNITIKA LTD.
Amagasaki-shi,
Hyogo 660-0824 (JP)**
• **TOYO INK MFG. CO., LTD.
Tokyo 104-0031 (JP)**

(72) Inventors:
• **KUWATA, Hideki c/o Unitika Ltd.,
Uji-shi, Kyoto 611-0021 (JP)**
• **OKUZU, Takayoshi c/o Unitika Ltd.,
Uji-shi, Kyoto 611-0021 (JP)**

• **MIYAKE, Munehiro c/o Unitika Ltd.,
Uji-shi, Kyoto 611-0021 (JP)**
• **YOSHIDA, Mitsuo c/o Toyo Ink Mfg Co., Ltd.
Chuo-ku, Tokyo (JP)**
• **OKAMOTO, Junji c/o Toyo Ink Mfg Co., Ltd.
Chuo-ku, Tokyo (JP)**
• **OZAKI, Kunihiko c/o Toyo Ink Mfg Co., Ltd.
Chuo-ku, Tokyo (JP)**
• **KAMOSHITA, Miyuki c/o Toyo Ink Mfg Co., Ltd.
Chuo-ku, Tokyo (JP)**
• **UENO, Reiko c/o Toyo Ink Mfg Co., Ltd.
Chuo-ku, Tokyo (JP)**

(74) Representative: **Bauch-Koepe, Katharina Anna
Postfach 22 12 64
80502 München (DE)**

(56) References cited:
**EP-A- 1 086 981          EP-A- 1 548 074
JP-A- 2000 000 931          JP-A- 2000 063 751
JP-A- 2000 177 771          JP-A- 2000 263 681
JP-A- 2001 071 425          JP-A- 2003 211 578
JP-A- 2004 136 281          JP-A- 2004 315 586
JP-A- 2004 322 625          US-A1- 2003 124 365**

**Description**

TECHNICAL FIELD

The present invention relates to a gas barrier laminate that exhibits excellent gas barrier properties even under conditions of high humidity, suffers no reduction in lamination strength following boiling treatment, and exhibits superior adhesion, heat resistance and water resistance.

BACKGROUND ART

Thermoplastic resin films such as polyamide films and polyester films have excellent strength, transparency and moldability, and are consequently widely used as packaging materials. However, because these thermoplastic resin films also exhibit reasonably high levels of permeability to gases such as oxygen, if this type of thermoplastic resin film is used for packaging general foodstuffs, retort foods, cosmetics, medical supplies, or agricultural chemicals or the like, then during long-term storage, gases such as oxygen can permeate through the film, causing deterioration of the package contents.
As a result, laminated films produced by coating the surface of a thermoplastic resin with an emulsion or the like ofpolyvinylidene chloride (hereafter abbreviated as PVDC), thereby forming a PVDC layer with good gas barrier properties, are widely used for applications such as food packaging. However, PVDC generates organic substances such as acidic gases on incineration, and with recent advances in environmental awareness, there is considerable demand for replacing PVDC with other materials.

One example of an alternative material to PVDC is polyvinyl alcohol (hereafter abbreviated as PVA), which does not generate toxic gases, and exhibits excellent gas barrier properties under low humidity conditions. However, as the humidity increases, the gas barrier property declines rapidly, so that in most cases, PVA films cannot be used for wrapping foods that contain moisture.

One example of a polymer known to improve upon the deterioration in gas barrier properties seen for PVA under high humidity conditions is a copolymer of vinyl alcohol and ethylene (hereafter abbreviated as EVOH). However, in order to ensure that the gas barrier property is maintained at a practical level under high humidity, the proportion of ethylene within the copolymer must be increased to a certain level, but the resulting polymer becomes difficult to dissolve in water. Accordingly, in order to produce a coating agent using EVOH with a high ethylene ratio within the copolymer, either an organic solvent, or a mixed solvent of water and an organic solvent must be used. However the use of organic solvents is undesirable from an environmental perspective, and also results in increased costs due to the necessity of providing a process for recovering the organic solvent.

Examples of methods that have been proposed for coating a film with a liquid composition comprising a water-soluble polymer in order to achieve favorable gas barrier properties even under conditions of high humidity include methods in which an aqueous solution comprising PVA and a partially neutralized product of polyacrylic acid or polymethacrylic acid is coated onto a film, and a heat treatment is then conducted to effect cross-linking via ester linkages between the two polymers (see patent references 1 to 7). However, in the methods proposed in these references, either a high-temperature heat treatment or a heat treatment over an extended period is required to achieve favorable gas barrier properties, and because large quantities of energy are therefore required during production, the impact on the environment is not insignificant. Moreover, if a high-temperature heat treatment is employed, then not only is there an increased danger of color changes or decomposition of the PVA and the like that constitute the gas barrier layer, but deformation such as wrinkling can occur in the plastic film substrate or the like to which the gas barrier layer is laminated, meaning the product cannot be used as a packaging material. In order to prevent deterioration of the plastic substrate, a special heat-resistant film that is capable of withstanding the high-temperature heat treatment must be used as the substrate, but this creates problems of practicality and economic viability. On the other hand, if the temperature of the heat treatment is lowered, then treatment must be conducted over an extremely long period, causing a deterioration in productivity.

Furthermore, investigations are also being conducted into resolving the above problems associated with PVA film by introducing cross-linking structures into the PVA. However, although the humidity dependence of the oxygen gas barrier property of PVA film typically decreases with increasing cross-linking density, the inherent oxygen gas barrier property of the PVA film under dry conditions tends to deteriorate, meaning it is extremely difficult to achieve a favorable oxygen gas barrier property under high humidity conditions. Cross-linking of polymer molecules generally improves the water resistance, but the gas barrier property describes the ability of the material to prevent the penetration or diffusion of comparatively small molecules such as oxygen, and a favorable gas barrier property can not always be achieved simply by cross-linking the polymer. For example, three dimensional cross-linked polymers such as epoxy resins and phenolic resins do not exhibit effective gas barrier properties.

Methods have also been proposed which, although using a water-soluble polymer such as PVA, are capable of providing gas barrier laminates with favorable gas barrier properties even under high humidity, by conducting heat treatments at lower temperatures or for shorter time periods than those conventionally used (see patent references 8 to 10).

Although using water-soluble polymers, the gas barrier layer-forming coating materials disclosed in the patent references 8 to 10 are able to form gas barrier laminates with superior gas barrier properties to those conventionally obtained, by conducting heating at lower temperatures or for shorter time periods than those employed for the coating agents disclosed in the patent references 1 to 7. However, with the methods disclosed in the patent references 8 to 10, in which an esterification reaction is conducted between the hydroxyl groups of PVA and the COOH groups within an ethylene-maleic acid copolymer, or in which metal cross-linking structures are introduced, there is a limit to the degree of improvement than can be achieved in the gas barrier property under high humidity.

As a result, other methods have been proposed that improve on the above techniques in order to achieve even better gas barrier properties (see patent references 11 to 14). These references disclose that, by heat treating a gas barrier coating material comprising PVA and a composition prepared by partially neutralizing an ethylene-maleic acid copolymer with a specific metal salt, a gas barrier coating can be obtained that is superior to those disclosed in the patent references 8 to 10, and that by heat treating the thus obtained gas barrier coating in the presence of water, or in the presence of water comprising a specific metal ion, an even more superior gas barrier coating can be obtained. Examples of the method used for conducting the heat treatment in the presence of water (or water comprising a specific metal ion) include immersion in hot water, hot water spraying, storage under high humidity conditions, and steam heating, wherein the treatment temperature is preferably not less than 90°C, and the treatment time is preferably not less than 1 minute.

However, in these types of methods, because the film with the gas barrier layer coated thereon must be in contact with water for a comparatively long time, the production process can be expected to be more complex, and the productivity is expected to worsen. Moreover, the effects of heat and water absorption on the film during the treatment step are considerable, meaning that, for example, in those cases where a highly water-absorbent film such as a polyamide is used as the substrate, adverse effects on the product quality such as deformation and curling are a concern.

As described above, although there are increasing demands for further improvements in the gas barrier properties under conditions of high humidity, obtaining a high-quality gas barrier laminate with superior performance in an industrially efficient manner has proven difficult with the conventional technology. Moreover, incorporating a metal compound into the coating agent causes a deterioration in the film-forming properties, and causes a deterioration in the adhesive strength, the heat resistance and the water resistance when a laminated structure (or a laminated product) is prepared with a heat seal layer, meaning performance problems arise in practical applications.

European Patent Application EP 1 086 981 A1 discloses gas-barrier films which are produced through applying a metallic compound to a surface of a processed polymer layer and a laminated gas-barrier film either surface of which is laminated on with a plastic film.

European Patent Application EP 1 548 074 A2 discloses a gas barrier coating material comprising polyvinyl alcohol, an ethylene-maleic acid polymer and a metal compound. Furthermore is disclosed a gas barrier layer formed from this gas barrier coating material, wherein the gas barrier layer is laminated on top of the plastic substrate.

Japanese Patent Application JP 2004 322625 A discloses a manufacturing method for gas barrier laminate, comprising heat-treating a gas-barrier laminate for forming a gas barrier layer.

US Patent Application US 2003/124365 A1 discloses oxygen barrier coating and coated film. The barrier coating used on an oxygen barrier film includes polyvinyl alcohol and a copolymer of maleic acid and acrylic acid. A method of stripping low molecular weight fractions from the copolymer is also disclosed.

Japanese Patent Application JP 2004 315586 A discloses a manufacturing method of a gas-barrier laminate comprising the application, direct or via an undercoat layer, of a coating (C) for forming a gas-barrier layer comprising a polyalcohol polymer (A) and an olefin-maleic acid copolymer (B) (except the combination of the polyvinyl alcohol and an ethylene-maleic acid copolymer) on a plastic base material, heat-treatment and subsequent heat-treatment in the presence of water.

Japanese Patent Application JP 2004 136281 A (see Patent Reference 13 below) discloses the production of a film and its laminate with preferable oxygen gas barrier properties under a high humidity and under a more moderate condition than that of the conventional method.

(Patent Reference 1) Japanese Patent Laid-Open No. H06-220221
(Patent Reference 2) Japanese Patent Laid-Open No. H07-102083
(Patent Reference 3) Japanese Patent Laid-Open No. H07-205379
(Patent Reference 4) Japanese Patent Laid-Open No. H07-266441
(Patent Reference 5) Japanese Patent Laid-Open No. H08-041218
(Patent Reference 6) Japanese Patent Laid-Open No. H10-237180
(Patent Reference 7) Japanese Patent Laid-Open No. 2000-000931
(Patent Reference 8) Japanese Patent Laid-Open No. 2001-323204

(Patent Reference 9) Japanese Patent Laid-Open No. 2002-020677
(Patent Reference 10) Japanese Patent Laid-Open No. 2002-241671
(Patent Reference 11) Japanese Patent Laid-Open No. 2004-115776
(Patent Reference 12) Japanese Patent Laid-Open No. 2004-137495
(Patent Reference 13) Japanese Patent Laid-Open No. 2004-136281
(Patent Reference 14) Japanese Patent Laid-Open No. 2004-322626

DISCLOSURE OF INVENTION

An object of the present invention is to provide a gas barrier laminate which, although using a water-soluble polymer, exhibits superior gas barrier properties under high humidity than those attainable with conventional technology, is transparent, exhibits superior adhesive strength, heat resistance and water resistance when a laminated structure (or a laminated product) is prepared with a heat seal layer, and is able to be produced in an industrially efficient manner, under milder conditions than those conventionally employed.

The inventors of the present invention discovered that by applying a gas barrier coating material with a specific resin composition to a plastic substrate, conducting a heat treatment, and subsequently forming another coating material film with a specific composition as an adjacent layer to the gas barrier coating material, they were able to achieve the object described above, and they were therefore able to complete the present invention.

In other words, the present invention relates to a gas barrier laminate comprising a plastic substrate (I); a gas barrier layer (II) formed from a gas barrier layer-forming coating material (C) containing a polyalcohol-based polymer (A) and a polycarboxylic acid-based polymer (B), wherein the polyalcohol-based polymer (A) comprises polyvinyl alcohol and the poly carboxylic acid-based polymer (B) comprises an ethylene-maleic acid copolymer; and an overcoat layer (III) formed from an overcoat layer-forming coating material (F) containing at least one of a monovalent metal compound (D) and a bivalent or higher metal compound (E) and a resin contained within the overcoat layer forming coating material (F) having a film elongation of at least 251% and less then 1,300%; wherein the gas barrier layer (II) is laminated to the plastic substrate (I), either directly or with an anchor coat layer disposed therebetween, the overcoat layer (III) is laminated on top of the gas barrier layer (II), and when a laminated product is prepared by laminating a laminate adhesive layer (IV) and a heat seal layer (V), in that order, to either the overcoat layer (III) or the plastic substrate (I) of the gas barrier laminate, either directly or with a printing ink layer disposed therebetween, the lamination strength (X) of the laminated product is not less than 1 N/cm, and the ratio of the lamination strength (Y) following a hot water treatment for 30 minutes at 95°C relative to the lamination strength (X) (namely, Y/X) is not less than 0.3.

Another aspect of the present invention relates to a laminated product, comprising the gas barrier laminate according to the aspect of the present invention described above, a laminate adhesive layer (IV), and a heat seal layer (V), wherein the laminate adhesive layer (IV) is laminated to either the overcoat layer (III) or the plastic substrate (I) of the gas barrier laminate, either directly or with a printing ink layer disposed therebetween, and the heat seal layer (V) is laminated to the top of the laminate adhesive layer (IV).

Another aspect of the present invention relates to a packaging material that comprises the gas barrier laminate according to the aspect of the present invention described above.

BEST MODE FOR CARRYING OUT THE INVENTION

<Gas Barrier Laminate>

A gas barrier laminate according to the present invention (hereafter also referred to as simply "the laminate") comprises a plastic substrate (I); a gas barrier layer (II) formed from a gas barrier layer-forming coating material (C) containing a polyalcohol-based polymer (A) and a polycarboxylic acid-based polymer (B), wherein the polyalcohol-based polymer (A) comprises polyvinyl alcohol and the polycarboxylic acid-based polymer (B) comprises an ethylene-maleic acid copolymer; and an overcoat layer (III) formed from an overcoat layer-forming coating material (F) containing at least one of a monovalent metal compound (D) and a bivalent or higher metal compound (E) and a resin contained within the overcoat layer forming coating material (F) having a film elongation of at least 251% and less than 1,300%; wherein these layers are laminated in the order (I) (II) (III). The gas barrier layer (II) may be either laminated directly to the plastic substrate (I), or may be laminated to the plastic substrate (I) via an anchor coat layer, as represented by plastic substrate / anchor coat layer / gas barrier layer.

By adopting this type of configuration, the present invention is able to provide a gas barrier laminate which, even when an overcoat layer containing a metal compound is formed, exhibits superior adhesion, heat resistance, water resistance and gas barrier properties to those obtained using the conventional technology.

<Plastic Substrate (I)>

The plastic substrate (I) is preferably a film-like substrate produced from a heat-moldable thermoplastic resin using a technique such as extrusion molding, injection molding, blow molding, stretch blow molding, or draw molding, although a substrate that has been molded into the shape of a container such as a bottle, a cup, or a tray is also suitable. This plastic substrate (I) may comprise either a single layer, or a plurality of layers produced by simultaneous melt extrusion or some other lamination process.

Examples of the thermoplastic resin used for forming the plastic substrate (I) include olefin-based copolymers, polyesters, polyamides, styrene-based copolymers, vinyl chloride-based copolymers, acrylic copolymers and polycarbonates, and of these, olefin-based copolymers, polyesters and polyamides are preferred.

Examples of olefin-based copolymers include low-, medium-, and high-density polyethylene, linear low-density polyethylene, polypropylene, ethylene-propylene copolymers, ethylene-butene copolymers, ionomers, ethylene-vinyl acetate copolymers, and ethylene-vinyl alcohol copolymers;

examples of polyesters include polylactic acid, polyethylene terephthalate, polybutylene terephthalate, polyethylene terephthalate/isophthalate, polytrimethylene terephthalate, polyethylene naphthalate and polybutylene naphthalate;

examples of polyamides include nylon 6, nylon 6,6, nylon 6,10, nylon 4,6 and meta-xylylene adipamide;

examples of styrene-based copolymers include polystyrene, styrene-butadiene block copolymers, styrene-acrylonitrile copolymers, and styrene-butadiene-acrylonitrile copolymers (ABS resins);

examples of vinyl chloride-based copolymers include polyvinyl chloride and vinyl chloride-vinyl acetate copolymers; and

examples of acrylic copolymers include polymethylmethacrylate and methyl methacrylate-ethyl acrylate copolymers. These thermoplastic resins may be used either alone, or in mixtures of two or more different resins.

Preferred thermoplastic resins include polyamide resins such as nylon 6, nylon 66 and nylon 46; aromatic polyester resins such as polyethylene terephthalate, polyethylene naphthalate, polytrimethylene terephthalate, polybutylene terephthalate and polybutylene naphthalate; aliphatic polyester resins such as polylactic acid; polyolefin resins such as polypropylene and polyethylene; and mixtures thereof.

If required, the above heat-moldable thermoplastic resin may also contain either one, or two or more additives such as pigments, antioxidants, antistatic agents, ultraviolet absorbers, lubricants or preservatives, which can be added in a combined quantity within a range from 0.001 to 5.0 parts by mass per 100 parts by mass of the resin.

Furthermore, in those cases where, as described below, the gas barrier laminate according to the present invention is used for forming a packaging material, in order to ensure adequate strength as a packaging material, any of the various reinforced plastics can be used as the plastic substrate (I) used for forming the gas barrier laminate. In other words, either one, or two or more reinforcing fibers such as glass fiber, aromatic polyamide fiber, carbon fiber, pulp, or cotton linter; powdered reinforcing materials such as carbon black or white carbon; or flake-like reinforcing materials such as glass flakes or aluminum flakes can be blended into the thermoplastic resin in a combined quantity within a range from 2 to 150 parts by mass per 100 parts by mass of the thermoplastic resin.

In order to increase the weight, either one, or two or more extenders such as heavy or light calcium carbonate, mica, talc, kaolin, gypsum, clay, barium sulfate, alumina powder, silica powder, or magnesium carbonate may also be blended into the resin using conventional methods, in a combined quantity within a range from 5 to 100 parts by mass per 100 parts by mass of the thermoplastic resin.

In addition, in order to further improve the gas barrier properties, scaly fine inorganic powders such as water-swelling mica or clay may also be blended into the resin using conventional methods, in a combined quantity within a range from 5 to 100 parts by mass per 100 parts by mass of the thermoplastic resin.

<Gas Barrier Layer (II)>

The gas barrier layer (II) is formed from the gas barrier layer-forming coating material (C) containing the polyalcohol-based polymer (A) and the polycarboxylic acid-based polymer (B). By applying this gas barrier layer-forming coating material (C) to the surface of the plastic substrate (I) and then conducting a heat treatment, the two components (A) and (B) undergo cross-linking via ester linkages, forming a gas barrier layer having a dense, cross-linked structure.

The relative blend proportions of the polyalcohol-based polymer (A) and the polycarboxylic acid-based polymer (B) are set such that the molar ratio between OH groups and COOH groups (OH groups / COOH groups) is preferably within a range from 0.01 to 20, even more preferably from 0.01 to 10, even more preferably from 0.02 to 5, and is most preferably from 0.04 to 2. If the proportion of OH groups is smaller than the above range, then there is a danger of a deterioration in the film-forming performance, whereas if the proportion of COOH groups is smaller than the above range, then there is a danger that a cross-linked structure with an adequate cross-linking density to the polyalcohol-based polymer (A) cannot be formed, and the gas barrier properties under high humidity conditions may not manifest satisfactorily.

From the viewpoint of workability, the gas barrier layer-forming coating material (C) is preferably either an aqueous solution or an aqueous dispersion, and is most preferably an aqueous solution. Accordingly, the polyalcohol-based polymer (A) is preferably water-soluble, and the polycarboxylic acid-based polymer (B) is also preferably water-soluble.

The polyalcohol-based polymer (A) is an alcohol-based polymer containing two or more hydroxyl groups within each molecule, preferred examples of which include polyvinyl alcohol, copolymers of ethylene and vinyl alcohol, and sugars.

The saponification degree within the polyvinyl alcohol or copolymer of ethylene and vinyl alcohol is preferably not less than 95 mol%, and is even more preferably 98 mol% or greater, whereas the average polymerization degree is preferably within a range from 50 to 4,000, and is even more preferably from 200 to 3,000.

Examples of sugars that may be used include monosaccharides, oligosaccharides and polysaccharides. These sugars also include sugar alcohols and the various substituted forms or derivatives thereof, and cyclic oligosaccharides such as cyclodextrin. These sugars are preferably soluble in water.

Examples of starches, which are included within the above polysaccharides, include raw starches (unmodified starches) such as wheat starch, corn starch, waxy corn starch, potato starch, tapioca starch, rice starch, ocarina starch and sago starch, as well as all manner of processed starches. Examples of processed starches include physically modified starches, enzymatically modified starches, starches modified by chemical decomposition, chemically modified starches, and grafted starches in which a monomer is graft polymerized to a starch. Of these starches, water-soluble processed starches such as roasted dextrin and glycosylated products of reduced starches in which the reducing terminals have been alcoholized are preferred. The starch may also be in the form of a hydrate. These starches may be used either alone, or in combinations of two or more different materials.

The aforementioned polyalcohol-based polymer (A) may use either a single compound, or a combination of two or more different compounds.

The polycarboxylic acid-based polymer (B) is a polymer (BP) containing carboxyl groups or acid anhydride groups, obtained by polymerizing a monomer (BM) containing a carboxyl group or acid anhydride group and an ethylenic unsaturated double bond. The monomer (BM) preferably contains an acryloyl group or methacryloyl group (hereafter, these groups are referred to jointly as a (meth)acryloyl group) as the ethylenic unsaturated double bond. Examples of the monomer include (meth)acrylic acid, 2-carboxyethyl (meth)acrylate, $\omega$-carboxy-polycaprolactone mono(meth)acrylate, maleic acid, maleic anhydride, fumaric acid, fumaric anhydride, citraconic acid, citraconic anhydride, itaconic acid, and itaconic anhydride. Of these, (meth)acrylic acid, maleic acid, maleic anhydride, itaconic acid and itaconic anhydride are preferred.

These monomers may be used alone or in combinations of two or more different monomers, or may also be used in a combination with another monomer. In other words, examples of the polymer (BP) obtained by polymerizing the monomer (BM) include homopolymers (BP1) obtained by polymerization of any one of the monomers (BM), copolymers (BP2) obtained by copolymerization of a plurality of the monomers (BM), and copolymers (BP3) obtained by copolymerization of a monomer (BM) and another monomer.

Examples of other monomers that can be copolymerized with the monomer (BM) include any monomer that does not contain a carboxyl group or hydroxyl group, but is able to undergo copolymerization with the monomer (BM). Examples include esterified products of unsaturated monocarboxylic acids such as crotonic acid or (meth)acrylic acid that do not contain a hydroxyl group or carboxyl group, (meth)acrylamide, (meth)acrylonitrile, styrene, styrenesulfonic acid, vinyltoluene, $\alpha$-olefins of 2 to 30 carbon atoms such as ethylene, alkyl vinyl ethers, and vinylpyrrolidone. These other monomers may be used either alone, or in combinations of two or more different monomers.

The coating material (C) may include arbitrary combinations of homopolymers (BP1), copolymers of BM monomers (BP2), and copolymers of a BM monomer and another monomer (BP3), and for example, may include two or more homopolymers (BP1), two or more copolymers (BP2), or two or more copolymers (BP3). Alternatively, other combinations such as a homopolymer (BP1) and a copolymer (BP2), a homopolymer (BP1) and a copolymer (BP3), a copolymer (BP2) and a copolymer (BP3), or a homopolymer (BP1), a copolymer (BP2) and a copolymer (BP3) may also be used.

One example of a polymer (BP) that can be used favorably is an olefin-maleic acid copolymer, and an ethylene-maleic acid copolymer (hereafter abbreviated as "EMA") is particularly desirable. This EMA can be obtained by copolymerization of maleic anhydride and ethylene, using known methods such as a solution radical polymerization.

The maleic acid units in EMA tend to form maleic anhydride structures under dry conditions via a cyclodehydration of adjacent carboxyl groups, but then undergo ring opening to form maleic acid structures under humid conditions or within an aqueous solution. Accordingly, unless stated otherwise, the combination of maleic acid units and maleic anhydride units is referred to generically using the term maleic acid units. The maleic acid units in the EMA preferably represent not less than 5 mol%, even more preferably 20 mol% or greater, even more preferably 30 mol% or greater, and most preferably 35 mol% or greater.

The weight average molecular weight of the EMA is preferably within a range from 1,000 to 1,000,000, even more preferably from 3,000 to 500,000, even more preferably from 7,000 to 300,000, and is most preferably from 10,000 to 200,000.

The polycarboxylic acid-based polymer (B) may use either a single polymer, or a combination of two or more different polymers.

In order to promote the cross-linking reaction between the polyalcohol-based polymer (A) and the polycarboxylic acid-based polymer (B), and improve the gas barrier properties, a cross-linking agent may be added to the gas barrier layer-forming coating material (C).

The quantity added of the cross-linking agent is preferably within a range from 0.1 to 30 parts by mass, and even more preferably from 1 to 20 parts by mass, per 100 parts by mass of the combination of the polyalcohol-based polymer (A) and the polycarboxylic acid-based polymer (B). If the quantity added of the cross-linking agent is less than 0.1 parts by mass, then the addition of the cross-linking agent yields no marked cross-linking effect compared with the case where no cross-linking agent is added, whereas if the quantity exceeds 30 parts by mass, then the cross-linking agent may actually impede the development of gas barrier properties, both of which are undesirable.

The above cross-linking agent may be a cross-linking agent with self cross-linking properties, a compound that contains a plurality of functional groups within each molecule capable of reacting with carboxyl groups and/or hydroxyl groups, or a metal complex with polyvalent coordination sites. Of these, isocyanate compounds, melamine compounds, urea compounds, epoxy compounds, carbodiimide compounds and zirconium salt compounds and the like are preferred, as they yield superior gas barrier properties. A plurality of these cross-linking agents may also be used in combination.

Alternatively, a catalyst such as an acid may be added to the coating material (C) in order to accelerate the cross-linking reaction and improve the gas barrier properties.

Adding a cross-linking agent or a catalyst accelerates the cross-linking reaction that occurs via the formation of ester linkages between the polyalcohol-based polymer (A) and the polycarboxylic acid-based polymer (B), and is therefore able to further improve the gas barrier properties of the resulting gas barrier layer (II).

Moreover, additives such as heat stabilizers, antioxidants, reinforcing materials, pigments, age resistors, weatherproofing agents, flame retardants, plasticizers, release agents and lubricants may also be added to the gas barrier layer-forming coating material (C), provided such addition does not significantly impair the characteristics of the coating material.

Examples of the above heat stabilizers, antioxidants and age resistors include hindered phenols, phosphorus compounds, hindered amines, sulfur compounds, copper compounds, alkali metal halides, and mixtures thereof.

Examples of reinforcing materials include clay, talc, calcium carbonate, zinc carbonate, wollastonite, silica, alumina, magnesium oxide, calcium silicate, sodium aluminate, sodium aluminosilicate, magnesium silicate, glass balloons, carbon black, zinc oxide, zeolite, hydrotalcite, metal fibers, metal whiskers, ceramic whiskers, potassium titanate whiskers, boron nitride, graphite, glass fiber, and carbon fiber.

In addition, an inorganic layered compound may also be added to the gas barrier layer-forming coating material (C) in order to further improve the gas barrier properties, provided such addition does not significantly impair the characteristics of the coating material. Here, the term "inorganic layered compound" refers to an inorganic compound in which unit crystal layers are superimposed to form a layered structure. Specific examples include zirconium phosphate (a phosphate-based derivative compound), chalcogenides, lithium-aluminum composite hydroxides, graphite, and clay minerals. Compounds that swell and undergo cleavage within solvents are preferred.

Examples of preferred clay minerals include montmorillonite, beidellite, saponite, hectorite, sauconite, vermiculite, fluoromica, muscovite, paragonite, phlogopite, biotite, lepidolite, margarite, clintonite, anandite, chlorite, donbassite, sudoite, cookeite, clinochlore, chamosite, nimite, tetrasilylic mica, talc, pyrophyllite, nacrite, kaolinite, halloysite, chrysotile, sodium taeniolite, xanthophyllite, antigorite, dickite, and hydrotalcite, and of these, swelling fluoromica or montmorillonite are particularly preferred.

These clay minerals may be naturally formed materials, artificially synthesized or modified materials, or compounds that have been treated with organic materials such as onium salts.

Of the above clay minerals, a swelling fluoromica-based mineral is the most preferred compound in terms of its degree of whiteness, and such minerals can be represented by the formula (1) shown below, and can be readily synthesized.

$$\alpha(MF) \cdot \beta(aMgF_2 \cdot bMgO) \cdot \gamma SiO_2 \qquad (1)$$

(In the formula, M represents sodium or lithium, and $\alpha$, $\beta$, $\gamma$, a, and b each represent a coefficient, wherein $0.1 \leq \alpha \leq 2$, $2 \leq \beta \leq 3.5$, $3 \leq \gamma \leq 4$, $0 \leq a \leq 1$, $0 \leq b \leq 1$, and a+b = 1.)

One method of producing this type of swelling fluoromica-based mineral is a socalled melt method, wherein silicon oxide, magnesium oxide, and various fluorides are mixed together, the resulting mixture is heated at 1,400 to 1,500°C in an electric or gas oven until the components have completely melted, and crystals of the fluoromica-based mineral are then grown within the reaction vessel during the cooling process.

An alternative method uses talc as a starting material, and involves intercalating alkali metal ions within the talc to generate a swelling fluoromica-based mineral (Japanese Patent Laid-Open No. H02-149415). In this method, the talc is mixed with an alkali silicofluoride or an alkali fluoride, and the mixture is then subjected to a short heat treatment in a magnetic crucible at a temperature of approximately 700 to 1,200°C, thereby yielding the swelling fluoromica-based mineral.

In this method, from the viewpoint of achieving a favorable production yield for the swelling fluoromica-based mineral, the quantity of the alkali silicofluoride or alkali fluoride mixed with the talc preferably represents 10 to 35% by mass of the resulting mixture.

In order to enable the above swelling fluoromica-based mineral to be obtained, the alkali metal of the alkali silicofluoride or alkali fluoride must be either sodium or lithium. These alkali metals may be used either alone, or in combination. Of the alkali metals, if potassium is used alone, then a swelling fluoromica-based mineral cannot be obtained, although potassium can be used in limited quantities in combination with either sodium or lithium, for the purpose of regulating the swelling characteristics.

In addition, a small quantity of alumina may also be added during production of the swelling fluoromica-based mineral to regulate the swelling characteristics of the produced swelling fluoromica-based mineral. Of the above clay minerals, montmorillonite is represented by a formula (2) shown below, and can be obtained by purifying naturally occurring material.

$$M_aSi_4(Al_{2-a}Mg_a)O_{10}(OH)_2 \cdot nH_2O \qquad (2)$$

(In the formula, M represents a sodium cation, and a represents a number within a range from 0.25 to 0.60. Furthermore, the number of water molecules bonded to the interlayer ion exchange cations varies depending on the nature of the cations and conditions such as the humidity, and this variability is expressed by the $nH_2O$ in the formula.)

Montmorillonite also includes the homoionic substituted materials of magnesian montmorillonite (3), iron montmorillonite (4), and iron magnesian montmorillonite (5), as represented by the group of formulas (3) to (5) shown below, and these materials may also be used.

$$M_aSi_4(Al_{1.67-a}Mg_{0.5+a})O_{10}(OH)_2 \cdot nH_2O \qquad (3)$$

$$M_aSi_4(Fe_{2-a}{}^{3+}Mg_a)O_{10}(OH)_2 \cdot nH_2O \qquad (4)$$

$$M_aSi_4(Fe_{1.67-a}{}^{3+}Mg_{0.5+a})O_{10}(OH)_2 \cdot nH_2O \qquad (5)$$

(In the formulas, M represents a sodium cation, and a represents a number within a range from 0.25 to 0.60.)

Normally, montmorillonite contains ion exchange cations such as sodium or calcium between the layers of the material, but the quantity of these cations varies depending on the location from which the material is sourced. In the present invention, a montmorillonite in which an ion exchange process or the like has been used to substitute these interlayer ion exchange cations with sodium is preferred. Furthermore, the use of montmorillonite that has been purified by water treatment is also preferred.

These types of inorganic layered compounds may also be added to the gas barrier layer-forming coating material (C) in combination with the aforementioned cross-linking agent.

When mixing the polyalcohol-based polymer (A) and the polycarboxylic acid-based polymer (B) to prepare an aqueous solution containing the two components that is then used as the coating material (C), an alkali compound is preferably added in sufficient quantity to provide from 0.1 to 20% equivalence relative to the carboxyl groups within the polycarboxylic acid-based polymer (B).

If the polycarboxylic acid-based polymer (B) contains a large quantity of carboxylic acid units, then the hydrophilicity of the polymer itself is high, and an aqueous solution can be formed without the addition of an alkali compound, but by adding an appropriate quantity of an alkali compound, the gas barrier properties of the film obtained by applying the gas barrier layer-forming coating material (C) can be improved markedly.

The alkali compound may be any compound capable of neutralizing the carboxyl groups within the polycarboxylic acid-based polymer (B), and examples include the hydroxides of alkali metals and alkaline earth metals, as well as ammonium hydroxide and organic ammonium hydroxides. Of these, alkali metal hydroxides are preferred.

The method used for preparing the above aqueous solution may be a conventional method that uses a dissolution tank fitted with a stirrer. For example, in a preferred method, aqueous solutions of the polyalcohol-based polymer (A) and the polycarboxylic acid-based polymer (B) are prepared separately, and then mixed together prior to use. In such cases, adding an aforementioned alkali compound to the aqueous solution of the polycarboxylic acid-based polymer (B) can be used to improve the stability of the aqueous solution.

The polyalcohol-based polymer (A) and the polycarboxylic acid-based polymer (B) may also be added simultaneously to water within a dissolution tank, but adding the alkali compound to the water first improves the solubility of the polycarboxylic acid-based polymer (B).

In order to enhance the solubility of the polycarboxylic acid-based polymer (B) in water, shorten the drying process, and improve the stability of the aqueous solution, a small quantity of an alcohol or organic solvent may be added to the water.

The concentration, namely the solid fraction, of the gas barrier layer-forming coating material (C) can be suitably adjusted in accordance with the specifications of the coating device, and/or the drying and heating device, although if the solution is overly dilute, then forming a thick enough layer (II) to ensure a satisfactory gas barrier property becomes difficult, and the subsequent drying process tends to require a long period of time. In contrast, if the concentration of the coating material is too high, then achieving a homogenous coating material becomes difficult, and coatability problems tend to develop. Considering these factors, the concentration (the solid fraction) of the coating material (C) is preferably within a range from 5 to 50% by mass.

When forming the gas barrier layer (II) from the gas barrier layer-forming coating material (C), the coating material is first applied to the plastic substrate (I) or the anchor coat layer formed on top of the plastic substrate (I). There are no particular restrictions on the coating method used for applying the coating material (C), and typical methods such as gravure roll coating, reverse roll coating, wire bar coating and air knife coating can be used.

Following application of the coating material (C), a heat treatment may be conducted immediately, thereby forming a dried coating and conducting a heat treatment simultaneously, or alternatively, the moisture and the like may be evaporated following application to first form a dried coating, by blowing hot air using a dryer or the like, or by irradiating infrared radiation, and a heat treatment then conducted subsequently. In terms of shortening the process, conducting the heat treatment immediately following coating is preferred, provided this does not impair the state of the gas barrier layer (II) or the physical properties such as the gas barrier property. There are no particular restrictions on the heat treatment method, and although conducting the heat treatment in a dry atmosphere such as an oven is considered typical, the heat treatment may also be conducted, for example, by bringing the coating into contact with a heated roller. In those cases where the substrate (I) is a stretched film, during formation of the gas barrier layer (II) from the gas barrier layer-forming coating material (C), either the coating material (C) may be applied to a stretched substrate (I), or the coating material (C) may be applied to the substrate (I) prior to stretching, and film stretching then conducted following coating.

In either of the above cases, by subjecting the plastic substrate (I) with the gas barrier layer-forming coating material (C) coated thereon to a heat treatment of not more than 1 minute within a heated atmosphere of at least 100°C, the polyalcohol-based polymer (A) and the polycarboxylic acid-based polymer (B) contained within the gas barrier layer-forming coating material (C) undergo a cross-linking reaction that forms ester linkages, and as a result of this cross-linking, the water-insoluble gas barrier layer (II) is formed.

The heat treatment conditions are affected by factors such as the ratio between the polyalcohol-based polymer (A) and the polycarboxylic acid-based polymer (B), the existence of other added components, and the quantity of such added components if included, and although it is impossible to generalize regarding the ideal heat treatment temperature for forming the gas barrier layer, the heat treatment is preferably conducted at a temperature within a range from 100 to 300°C, even more preferably from 120 to 250°C, even more preferably from 140 to 240°C, and most preferably from 160 to 220°C. If the heat treatment temperature is too low, then the cross-linking reaction between the polyalcohol-based polymer (A) and the polycarboxylic acid-based polymer (B) may not proceed satisfactorily, making it difficult to obtain a gas barrier layer (II) with satisfactory gas barrier properties, whereas if the temperature is too high, then there is a danger that the coating may become brittle, both of which are undesirable.

The heat treatment time is preferably not longer than 5 minutes, is typically within a range from 1 second to 5 minutes, preferably from 3 seconds to 2 minutes, and even more preferably from 5 seconds to 1 minute. If the heat treatment time is too short, then the above cross-linking reaction may not proceed satisfactorily, making it difficult to obtain a gas barrier layer (II) with satisfactory gas barrier properties, whereas if the heat treatment time is too long, the productivity may deteriorate.

In the present invention, the comparatively short heat treatment described above enables the formation of cross-linked structures based on ester linkages between the polyalcohol-based polymer (A) and the polycarboxylic acid-based polymer (B), thereby enabling the formation of the gas barrier layer (II).

The thickness of the formed gas barrier layer (II) is preferably within a range from 0.05 to 3 $\mu$m, even more preferably from 0.05 to 2 $\mu$m, and is most preferably within a range from 0.08 to 1 $\mu$m. If the thickness of the gas barrier layer (II) is less than 0.05 $\mu$m, then forming a layer of uniform thickness becomes problematic. In contrast, if the thickness exceeds 3 $\mu$m, then the heat treatment time may lengthen, and there is a danger of a deterioration in the productivity.

<Anchor Coat Layer>

An anchor coat layer may be used as required, is positioned between the plastic substrate (I) and the gas barrier layer (II), and has a principal role of improving the adhesion of the gas barrier layer (II).

The coating agent used in the anchor coat layer can use conventional materials without any particular restrictions.

Examples include isocyanate-based, polyurethane-based, polyester-based, polyethyleneimine-based, polybutadiene-based, polyolefin-based and alkyl titanate-based anchor coating agents. Of these, in view of achieving superior effects for the present invention, isocyanate-based, polyurethane-based and polyester-based anchor coating agents are preferred. Moreover, mixtures and reaction products of either one, or two or more isocyanate compounds, polyurethanes or urethane prepolymers; mixtures and reaction products of one, or two or more polyesters, polyols or polyethers, and an isocyanate; or solutions or dispersions thereof are preferred.

The coating agent can be applied to the substrate (I) using the same method as the coating method used for the coating material (C).

<Overcoat Layer (III)>

The overcoat layer (III) is a resin layer that is formed on top of the gas barrier layer (II) using an overcoat layer-forming coating material (F) that contains a monovalent metal compound (D) and/or a bivalent or higher metal compound (E).

The overcoat layer (III) is preferably formed by applying the overcoat layer-forming coating material (F) to the surface of the gas barrier layer (II), and subsequently conducting a heat treatment.

The monovalent metal compound (D) and/or bivalent or higher metal compound (E) within the overcoat layer (III) reacts with the polyalcohol-based polymer (A) or polycarboxylic acid-based polymer (B) within the gas barrier layer (II), forming cross-linked structures and therefore markedly improving the gas barrier properties of the laminate. The cross-linked structures formed by the reaction of the monovalent metal compound (D) and/or bivalent or higher metal compound (E) with the polyalcohol-based polymer (A) or the polycarboxylic acid-based polymer (B) may be coordination bonds, or the more obvious ionic or covalent bonds.

In the present invention, these metal compounds are incorporated into the resin layer, and applied as a resin coating material, which is subsequently subjected to a heat treatment. By employing this method, superior gas barrier properties and transparency can be imparted to the laminate more easily, and in a more industrially efficient manner, than the case where the metal compound is applied as an aqueous solution and then subjected to a heat treatment.

Examples of metals that may be used in the monovalent metal compound (D) include Li, Na, K, Rb and Se, of these, Li, Na and K are preferred, and of these, Li is the most desirable. The form of the metal compound used includes simple metals, as well as inorganic salts such as oxides, hydroxides, halides, carbonates and sulfates, and organic acid salts such as carboxylates and sulfonates. Of these, hydroxides and carbonates are preferred.

Examples of the metal within the bivalent or higher metal compound (E) include Mg, Ca, Zn, Cu, Co, Fe, Ni, Al, and Zr. Of these, Mg, Ca and Zn are preferred, and Mg and Ca are particularly desirable. The form of the metal compound used includes simple metals, as well as inorganic salts such as oxides, hydroxides, halides, carbonates and sulfates, and organic acid salts such as carboxylates and sulfonates. Of these, oxides, hydroxides and carbonates are preferred.

These metal compounds ((D) and/or (E)) may be used either alone, or in combinations of two or more different compounds, and for example, a plurality of compounds (D) and/or a plurality of compounds (E) may be used.

The blend ratio of the metal compound ((D) and/or (E)) within the overcoat layer-forming coating material (F) varies considerably depending on factors such as the type of metal used, the form of the compound, and the type of resin used in forming the overcoat layer-forming coating material (F), but the quantity of the metal compound relative to 100 parts by mass of the solid fraction of the resin used in forming the overcoat layer-forming coating material (F) (or in those cases where a cross-linking agent is use, the combined solid fraction of the resin and the cross-linking agent) is preferably within a range from 0.1 to 100 parts by mass, even more preferably from 0.5 to 80 parts by mass, even more preferably from 0.75 to 75 parts by mass, and is most preferably from 1 to 65 parts by mass. If the blend quantity of the metal compound is less than 0.1 parts by mass, then the quantity of cross-linked structures formed by reaction with the polyalcohol-based polymer (A) or polycarboxylic acid-based polymer (B) within the gas barrier layer (II) decreases, meaning there is a danger of a deterioration in the gas barrier properties. In contrast, if the blend quantity of the metal compound exceeds 100 parts by mass, then the adhesion, heat resistance and water resistance of the formed overcoat layer (III) are prone to deterioration.

The overcoat layer-forming coating material (F) may be an organic solvent-based coating liquid, an aqueous solution, or an aqueous dispersion. From the viewpoint of the gas barrier properties, and in terms of promoting the ionization of the metal, the overcoat layer-forming coating material (F) is preferably an aqueous solution or aqueous dispersion.

However, in those cases where a monovalent metal compound (D) and/or bivalent or higher metal compound (E) that exhibits a comparatively high level of solubility in water is used, there is a danger that the water resistance of the overcoat layer (III) formed from the overcoat layer-forming coating material (F) may deteriorate. Moreover, in those cases where a basic monovalent metal compound (D) and/or bivalent or higher metal compound (E) is used, if the overcoat layer-forming coating material (F) is an aqueous solution or aqueous dispersion, then there is a danger that the stability and/or pot life of the overcoat layer-forming coating material (F) may deteriorate.

For the above reasons, the overcoat layer-forming coating material (F) is preferably an organic solvent-based coating liquid. Here, the term "organic solvent-based coating liquid" means that solvents other than water represent at least 90% by mass, and preferably 95% by mass or greater, of the total quantity of solvent within the coating liquid.

Conventional organic solvents may be used as the solvent other than water, and examples include toluene, methyl ethyl ketone (MEK), cyclohexanone, Solvesso, isophorone, xylene, methyl isobutyl ketone (MIBK), ethyl acetate, propyl acetate, butyl acetate and isopropyl alcohol (IPA), although this is not an exhaustive list, and most conventional organic solvents may be used either alone, or in mixtures containing two or more different solvents.

From the viewpoint of achieving superior transparency following film formation, the monovalent metal compound (D) and/or bivalent or higher metal compound (E) is preferably in a finely powdered state at the time of mixing, and the average particle size is preferably not more than 10 $\mu$m, even more preferably not more than 3 $\mu$m, and is most preferably 1 $\mu$m or less.

Even if the powder is very fine, in those cases where the metal compound is used within a suspension, there is a danger that deposits or external appearance defects may occur upon drying, and consequently, using a fine powder dispersion that also includes a dispersant is preferred.

There are no particular restrictions on the dispersion device used for effecting dispersion, and examples include a paint conditioner (manufactured by Red Devil Equipment Co.), ball mill, sand mill (such as a "Dyno-mill" manufactured by Shinmaru Enterprises Corporation), attritor, pearl mill (such as a "DCP mill" manufactured by Eirich GmbH), coball mill, basket mill, homomixer, homogenizer, (such as "Clearmix" manufactured by M Technique Co., Ltd.), wet jet mill (such as a "Genus PY" manufactured by Genus Corporation) and a "nanomizer" manufactured by Nanomizer, Inc. Considering factors such as cost and processing ability, the use of a media-type dispersion device is preferred. Furthermore, examples of media that can be used include glass beads, zirconia beads, alumina beads, magnetic beads and stainless-steel beads.

In the case of the oxides, hydroxides and carbonates of Mg and Ca, which are particularly effective as the bivalent or higher metal compound (E), conducting dispersion using a dispersant (H) enables a transparent coating to be formed even if the quantity added of the metal compound is 65 parts by mass per 100 parts by mass of the resin solid fraction (or in those cases where a cross-linking agent is use, the combined solid fraction of the resin and the cross-linking agent) within the overcoat layer-forming coating material (F).

Known materials may be used as the dispersant (H), including the products listed below.

Products manufactured by BYK Chemie, including Disperbyk, or Disperbyk 101, 103, 107, 108, 110, 111, 116, 130, 140, 154, 161, 162, 163, 164, 165, 166, 170, 171, 174, 180, 181, 182, 183, 184, 185, 190, 191, 192, 2000 and 2001; Anti-Terra-U, 203 and 204; BYK-P104, P104S and 220S; Lactimon and Lactimon-WS; or Bykumon;

products manufactured by Avecia Ltd., including SOLSPERSE 3000, 9000, 13240, 13650, 13940, 17000, 18000, 20000, 21000, 24000, 26000, 27000, 28000, 31845, 32000, 32500, 32600, 34750, 36600, 38500, 41000, 41090, 43000, 44000 and 53095;

products manufactured by Efka Chemicals GmbH, including EFKA 46, 47, 48, 452, LP4008, 4009, LP4010, LP4050, LP4055, 400, 401, 402, 403, 450, 451, 453, 4540, 4550, LP4560, 120, 150, 1501, 1502 and 1503; and

(poly)glycerol fatty acid esters, organic acid monoglycerides, sucrose fatty acid esters, lecithin, soybean polysaccharides, carboxymethylcellulose, sodium alginate, propylene glycol alginate, processed starch, guar gum, locust bean gum, xanthan gum, pectin, carrageenan, ghatti gum, curdlan, tamarind seed gum, karaya gum, tara gum, gellan gum, tragacanth gum, gum arabic, arabino galactan, alkyl phosphates, and polycarboxylic acid salts.

Of these, from the viewpoints of hygiene, dispersibility, and gas barrier properties, (poly)glycerol fatty acid esters and sucrose fatty acid esters are preferred, and (poly)glycerol fatty acid esters are particularly desirable.

These dispersants may be used either alone, or in combinations of two or more different products.

In terms of dispersibility, the (poly)glycerol fatty acid ester preferably has a polymerization degree of 1 to 20, and even more preferably 12 or less.

The fatty acid is preferably a saturated or unsaturated fatty acid of 10 to 22 carbon atoms, and specific examples include saturated fatty acids such as lauric acid, myristic acid, palmitic acid, stearic acid, arachic acid and docosanoic acid, and unsaturated fatty acids such as oleic acid, linolic acid, linoleic acid, erucic acid and arachidonic acid, although this is not an exhaustive list.

The HLB value for the (poly)glycerol fatty acid ester, in the case of a water-based system, is preferably 5 or greater, and even more preferably 7 or greater. When used in an organic solvent system, the HLB is preferably within a range from 2 to 15, and even more preferably from 4 to 13.

There are no particular restrictions on the method used for mixing the metal compound into the overcoat layer-forming coating material (F), and examples include methods in which a solution containing the metal compound dissolved and/or dispersed therein is mixed with another solution containing the resin component of the coating material (F) dissolved within a solvent such as an organic solvent; methods in which a powder of the metal compound and/or a solution containing the metal compound dissolved therein is mixed with an emulsion containing the resin component of the overcoat layer-forming coating material (F) dispersed within a solvent; methods in which the resin and the metal compound are subjected to plastic mixing under heat, and subsequently used as a coating material; methods in which a powder of the metal compound is mixed with a solution or emulsion containing the resin component of the overcoat layer-forming coating material (F) dissolved or dispersed within a solvent, and the metal compound is then dispersed using a dispersion device; and methods in which the metal compound is dispersed in advance within an arbitrary solvent using a dispersion device, and the resulting dispersion is then mixed with a solution or emulsion containing the resin component of the overcoat layer-forming coating material (F) dissolved or dispersed within a solvent.

Of these, methods in which a powder of the metal compound and/or a solution containing the metal compound dissolved therein is mixed with an emulsion containing the resin component of the overcoat layer-forming coating material (F) dispersed within a solvent; and methods in which the metal compound is dispersed in advance within an arbitrary solvent using a dispersion device, and the resulting dispersion is then mixed with a solution or emulsion containing the resin component of the overcoat layer-forming coating material (F) dissolved or dispersed within a solvent are preferred as they enable comparatively uniform dispersion of the metal compound.

Examples of the resin used in forming the overcoat layer-forming coating material (F) include conventional urethane resins, polyester resins, acrylic resins, epoxy resins, alkyd resins, melamine resins, and amino resins. Of these, from the viewpoints of the water resistance, solvent resistance, heat resistance and curing temperature, urethane resins, polyester resins and acrylic resins are preferred, and urethane resins are particularly desirable.

These resins may be used either alone, or in mixtures containing two or more different resins.

Urethane resins are polymers obtained, for example, by a reaction between a polyfunctional isocyanate and a hydroxyl group-containing compound, and specific examples of urethane resins that can be used include those obtained by the reaction between a polyfunctional isocyanate, such as an aromatic polyisocyanate such as tolylene diisocyanate, diphenylmethane isocyanate or polymethylene polyphenylene polyisocyanate, or an aliphatic polyisocyanate such as hexamethylene diisocyanate or xylene isocyanate, and a hydroxyl group-containing compound such as a polyether polyol, polyester polyol, polyacrylate polyol or polycarbonate polyol.

The polyester resin is preferably a polyester polyol, examples of which include polyester polyols obtained by the reaction between a polyvalent carboxylic acid, a dialkyl ester thereof, or a mixture thereof, and a glycol or mixture of glycols.

Examples of the polyvalent carboxylic acid include aromatic polyvalent carboxylic acids such as isophthalic acid, terephthalic acid and naphthalenedicarboxylic acid, and aliphatic polyvalent carboxylic acids such as adipic acid, azelaic acid, sebacic acid and cyclohexanedicarboxylic acid.

Examples of the glycol include ethylene glycol, propylene glycol, diethylene glycol, butylene glycol, neopentyl glycol and 1,6-hexanediol.

These polyester polyols preferably have a glass transition temperature (hereafter referred to as "Tg") of not more than 120°C, even more preferably not more than 100°C, even more preferably not more than 80°C, and most preferably not more than 70°C.

Moreover, the number average molecular weight of these polyester polyols is preferably within a range from 1,000 to 100,000, even more preferably from 2,000 to 50,000, and most preferably from 3,000 to 40,000.

A cross-linking agent may also be added to the overcoat layer-forming coating material (F) to improve the water resistance and solvent resistance and the like of the formed overcoat layer (III). The cross-linking agent may be a cross-linking agent with self cross-linking properties, a compound that contains a plurality of functional groups within each molecule capable of reacting with carboxyl groups and/or hydroxyl groups, or a metal complex with polyvalent coordination sites. Of these, isocyanate compounds, melamine compounds, urea compounds, epoxy compounds and carbodiimide compounds are preferred, and isocyanate compounds are particularly desirable.

Specific examples include aromatic polyisocyanates such as tolylene diisocyanate, phenylene diisocyanate, diphenylmethane diisocyanate, naphthalene diisocyanate, xylylene diisocyanate and polymethylene polyphenylene polyisocyanate; aliphatic polyisocyanates such as tetramethylene diisocyanate, hexamethylene diisocyanate, dodecamethylene diisocyanate, trimethylhexamethylene diisocyanate, cyclohexylene diisocyanate, isophorone diisocyanate, dicyclohexylmethane diisocyanate and xylene isocyanate; polyfunctional polyisocyanate compounds such as isocyanurates, biurets and allophanates derived from the above polyisocyanate monomers; and polyfunctional polyisocyanate compounds containing terminal isocyanate groups, obtained through reaction with a trifunctional or higher polyol compound such as trimethylolpropane or glycerol.

The quantity added of the cross-linking agent is preferably within a range from 0.1 to 300 parts by mass, even more preferably from 1 to 100 parts by mass, and most preferably from 3 to 50 parts by mass, per 100 parts by mass of the resin solid fraction contained within the overcoat layer-forming coating material (F). If the quantity added of the cross-linking agent is less than 0.1 parts by mass, then the addition of the cross-linking agent yields no marked cross-linking effect compared with the case where no cross-linking agent is added, whereas if the quantity exceeds 300 parts by mass, then the cross-linking agent may actually impede the development of gas barrier properties, both of which are undesirable.

The overcoat layer-forming coating material (F) is a solution or dispersion in which water or an organic solvent is used as the solvent medium. As described above, from the viewpoints of the stability of the coating liquid, the pot life, and the water resistance, an organic solvent-based coating liquid is preferred as the coating material (F). Accordingly, the resin and cross-linking agent that form the coating material (F) are preferably soluble in organic solvents, and a combination of a polyester polyol with a Tg value of not more than 70°C and a polyisocyanate is particularly preferred in terms of the coating properties, the productivity, and the physical properties required.

Moreover, the film elongation for the resin contained within the overcoat layer-forming coating material (F) is even more preferably within a range from 290 to 900%. If the film elongation is less than 251%, then the adhesion between the overcoat layer (III) and the gas barrier layer (II), between the overcoat layer (III) and the laminate adhesive layer (IV), or between the laminate adhesive layer (IV) and the heat seal layer (V) is prone to deterioration. Furthermore, if the elongation is 1,300% or greater, then the heat resistance of the overcoat layer (III) decreases, and the adhesion following boiling treatment between the overcoat layer (III) and the gas barrier layer (II), between the overcoat layer (III) and the laminate adhesive layer (IV), or between the laminate adhesive layer (IV) and the heat seal layer (V) tends to be prone to deterioration, often accompanied by a deterioration in the blocking properties.

Additives such as heat stabilizers, antioxidants, reinforcing materials, pigments, age resistors, weatherproofing agents, flame retardants, plasticizers, release agents, and lubricants may also be incorporated within the overcoat layer-forming coating material (F), provided the addition of such materials does not significantly impair the characteristics of the coating material.
Examples of the above heat stabilizers, antioxidants and age resistors include hindered phenols, phosphorus compounds, hindered amines, sulfur compounds, copper compounds, alkali metal halides, and mixtures thereof.
Examples of reinforcing materials include clay, talc, calcium carbonate, zinc carbonate, wollastonite, silica, alumina, magnesium oxide, calcium silicate, sodium aluminate, sodium aluminosilicate, magnesium silicate, glass balloons, carbon black, zinc oxide, zeolite, hydrotalcite, metal fibers, metal whiskers, ceramic whiskers, potassium titanate whiskers, boron nitride, graphite, glass fiber, and carbon fiber.

The concentration (the solid fraction) of the overcoat layer-forming coating material (F) can be suitably adjusted in accordance with the specifications of the coating device, and/or the drying and heating device, although if the solution is overly dilute, then forming a layer, via reaction with the gas barrier layer (II), that is thick enough to ensure a satisfactory gas barrier property becomes difficult, and the subsequent drying process tends to require a long period of time. In contrast, if the concentration of the coating material (F) is too high, then achieving a homogenous coating material becomes difficult, and coatability problems tend to develop. Considering these factors, the concentration (the solid fraction) of the coating material (F) is preferably within a range from 5 to 50% by mass.

When forming the overcoat layer (III) from the overcoat layer-forming coating material (F), a heat treatment may be conducted immediately following application of the coating material (F) to the formed gas barrier layer (II), thereby forming a dried coating and conducting a heat treatment simultaneously, or alternatively, the moisture and the like may be evaporated following application to first form a dried coating, by blowing hot air using a dryer or the like, or by irradiating infrared radiation, and a heat treatment then conducted subsequently. In terms of shortening the process, conducting the heat treatment immediately following coating is preferred, provided this does not impair the state of the gas barrier layer (II) and the overcoat layer (III) or the physical properties such as the gas barrier property. There are no particular restrictions on the heat treatment method, and although conducting the heat treatment in a dry atmosphere such as an oven is considered typical, the heat treatment may also be conducted, for example, by bringing the coating into contact with a heated roller.

The thickness of the overcoat layer (III) formed on top of the gas barrier layer (II) varies depending on the thickness of the gas barrier layer (II), but in order to ensure favorable gas barrier properties via reaction with the gas barrier layer (II), the thickness of the overcoat layer (III) is preferably thicker than 0.1 $\mu$m, and from the viewpoints of productivity and cost, is preferably not more than 3 $\mu$m, is even more preferably within a range from 0.1 to 2 $\mu$m, and is most preferably from 0.15 to 1.5 $\mu$m.

There are no particular restrictions on the method used for applying the overcoat layer-forming coating material (F), and typical methods such as gravure roll coating, reverse roll coating, wire bar coating and air knife coating can be used.

The heat treatment conditions are affected by factors such as the blend ratio between the metal compound ((D) and/or (E)) and the resin, the existence of other added components, and the quantity of such added components if included, and although it is impossible to generalize regarding the ideal heat treatment temperature for forming the overcoat layer (III), the heat treatment is preferably conducted at a temperature within a range from 50 to 300°C, even more preferably from 70 to 250°C, and most preferably from 100 to 200°C. If the heat treatment temperature is too low, then the heat cross-linking reaction between the resin and the cross-linking agent within the overcoat layer-forming coating material (F) may not proceed satisfactorily, meaning adequate levels of adhesion, water resistance and heat resistance may be difficult to achieve, and the interaction between the metal compound and the polyalcohol-based polymer (A) and polycarboxylic acid-based polymer (B) within the gas barrier layer (II) may not proceed satisfactorily, making it difficult to obtain a laminate with satisfactory gas barrier properties. In contrast, if the heat treatment temperature is too high, then it is not preferable as there is a danger of wrinkling caused by film contraction, or coating brittleness.

From the viewpoint of productivity, the heat treatment time is preferably not longer than 5 minutes, is typically within a range from 1 second to 5 minutes, preferably from 3 seconds to 2 minutes, and even more preferably from 5 seconds to 1 minute. If the heat treatment time is too short, then the above interactions may not proceed satisfactorily, making it difficult to obtain a film with satisfactory adhesion, heat resistance, water resistance, and gas barrier properties.

In order to ensure that the metal compound contained within the overcoat layer (III) interacts effectively with the polyalcohol-based polymer (A) and the polycarboxylic acid-based polymer (B) contained within the gas barrier layer (II), it is important that the layers (II) and (III) are in mutual contact. Accordingly, the plastic substrate (I), the gas barrier layer (II) and the overcoat layer (III) must be laminated in the order (I) (II) (III). The fact that an anchor coat layer may be included between (I) and (II) is as described above.

<Laminated Product>

The gas barrier laminate according to the present invention may also include a laminate adhesive layer (IV), laminated either directly on top of the overcoat layer (III) or with a printing ink layer disposed therebetween, as well as a heat seal layer (V) laminated to the top of the laminate adhesive layer (IV), thereby forming a laminated product in which the layers are laminated in the order (I) (II) (III) (IV) (V) or (I) (II) (III) (printing ink layer) (IV) (V); or may include a laminate adhesive layer (IV), laminated either directly to the substrate (I) or with a printing ink layer disposed therebetween, as well as a heat seal layer (V) laminated to the top of the laminate adhesive layer (IV), thereby forming a laminated product in which the layers are laminated in the order (V) (IV) (I) (II) (III) or (V) (IV) (printing ink layer) (I) (II) (III). However, in terms of the scratch resistance and abrasion resistance of the laminated product, the structures (I) (II) (III) (IV) (V) and (I) (II) (III) (printing ink layer) (IV) (V) are preferred. In some cases, a functional layer such as a primer layer or an antistatic layer may also be formed between the overcoat layer (III) and the laminate adhesive layer (IV), or between the plastic substrate (I) and the laminate adhesive layer (IV) of the gas barrier laminate. Alternatively, a surface treatment such as a corona treatment or ozone treatment may be conducted between the overcoat layer (III) and the laminate adhesive layer (IV) (the mutually contacting surfaces), or between the plastic substrate (I) and the laminate adhesive layer (IV) (the mutually contacting surfaces) of the gas barrier laminate, in order to improve the adhesion.

<Printing Ink Layer>

The printing ink layer is a printed layer of ink, and comprises text or a picture or the like formed using an ink. Examples of inks that can be used include conventional inks comprising an ink binder resin such as a urethane-based, acrylic-based, nitrocellulose-based, rubber-based or vinyl chloride-based resin, to which have been added various pigments, extender pigments, and additives such as plasticizers, drying agents and stabilizers.
Examples of the method used for forming the printing ink layer include, for example, conventional printing methods such as offset printing methods, gravure printing methods and silk screen printing methods, as well as conventional coating methods such as roll coating, knife edge coating, and gravure coating.

<Laminate Adhesive Layer (IV)>

The laminate adhesive layer (IV) is a layer that is used for improving the adhesion between the heat seal layer (V) and the layer that contacts the heat seal layer via the laminate adhesive layer (IV).
The coating agent used in forming the laminate adhesive layer (IV) can use conventional materials. Examples include isocyanate-based, polyurethane-based, polyester-based, polyethyleneimine-based, polybutadiene-based, polyolefin-based and alkyl titanate-based coating agents. Of these, in view of achieving effects such as adhesion, heat resistance and water resistance, isocyanate-based, polyurethane-based and polyester-based coating agents are preferred. Moreover, mixtures and reaction products of either one, or two or more isocyanate compounds, polyurethanes or urethane prepolymers; mixtures and reaction products of one, or two or more polyesters, polyols or polyethers, and an isocyanate; or solutions or dispersions thereof are preferred.
In order to satisfactorily enhance the adhesion of the heat seal layer, the thickness of the laminate adhesive layer (IV) is preferably thicker than 0.1 μm, whereas from the viewpoint of productivity, is preferably no thicker than approximately 10 μm.

<Heat Seal Layer (V)>

The heat seal layer (V) is a layer that is provided as a heat-bondable layer used when forming a bag-shaped package or the like, and employs a material that is able to be sealed by heat or high frequency radiation or the like.

Examples of this material include low-density polyethylene, straight-chain low-density polyethylene, high-density polyethylene, ethylene-vinyl acetate copolymers, polypropylene, ethylene-acrylic acid copolymers, ethylene-acrylic acid salt copolymers, and ethylene-acrylate copolymers.

The thickness is determined in accordance with the intended purpose, but is typically within a range from 15 to 200 $\mu$m.

Conventional methods can be used for forming the laminate adhesive layer (IV) and the heat seal layer (V). Examples include lamination methods such as dry lamination methods, wet lamination methods, solventless dry lamination methods and extrusion lamination methods; co-extrusion methods in which two or more resin layers are extruded simultaneously, and coating methods in which a film is generated using a coater or the like. Considering factors such as the adhesion, heat resistance and water resistance, dry lamination methods are preferred.

The laminate or laminated product may also be treated under a humid atmosphere in order to enhance the gas barrier properties of the laminate or laminated product. Conducting a humidification treatment enables further acceleration of the interaction between the metal compound ((D) and/or (E)), and the polyalcohol-based polymer (A) and polycarboxylic acid-based polymer (B) of the gas barrier layer (II). This humidification treatment may be conducted by leaving the laminate or laminated product to stand in a high temperature, high humidity atmosphere, or by bringing the laminate or laminated product into contact with water at a high temperature. The humidification treatment conditions vary depending on the purpose, but in those cases where the laminate or laminated product is left to stand in a high temperature, high humidity atmosphere, a temperature of 30 to 130°C and a relative humidity of 50 to 100% are preferred. In those cases where the laminate or laminated product is brought into contact with water at a high temperature, a temperature of approximately 30 to 130°C (under pressure for temperatures of 100°C or higher) is preferred. If the temperature is too low, then the effect of the humidification treatment is inadequate, whereas if the temperature is too high, the substrate may be subjected to heat damage, both of which are undesirable. The time for the humidification treatment varies depending on the treatment conditions, but is generally selected within a range from several seconds to several hundred hours.

The lamination strength (X) of the laminated product must be not less than 1 N/cm, is preferably at least 1.5 N/cm, even more preferably at least 2 N/cm, and is most preferably 2.5 N/cm or greater. If the lamination strength is less than 1 N/cm, then when a packing bag is formed from the laminated product, contents are placed inside the bag, and the bag is sealed, bag rupture or sealing faults become more likely.

Moreover, the ratio of the lamination strength (Y) following a hot water treatment for 30 minutes at 95°C relative to the strength (X) prior to the treatment (namely, Y/X) must be not less than 0.3, is preferably at least 0.4, and is even more preferably 0.5 or greater. If this ratio is less than 0.3, then it is not preferable because, when a packing bag is formed from the laminated product, contents are placed inside the bag, and the bag is sealed and then subjected to a hot water treatment, bag rupture or sealing faults become more likely.

Here, the term "lamination strength" describes the interlayer adhesive strength between two arbitrary layers of a laminated product prepared by laminating a laminate adhesive layer (IV) and a heat seal layer (V), in that order, to the overcoat layer (III) or the plastic substrate (I) of a gas barrier laminate, either directly or with a printing ink layer disposed therebetween, and the expression "lamination strength of not less than 1 N/cm" means that the interlayer adhesive strength is at least 1 N/cm for each pair of layers.

The laminate or laminated product according to the present invention can be employed in all manner of fields that require favorable gas barrier properties or lamination strength following boiling treatment. For example, the laminate can be used favorably for all manner of packaging materials, and is particularly suited for packaging foodstuffs.

EXAMPLES

As follows is a description of specifics of the present invention, based on a series of examples and comparative examples, although the present invention is not limited solely to these examples.

<Film Elongation>

The resin used in forming the overcoat layer-forming coating material (F) was applied to a steel sheet in sufficient quantity to generate a dried film thickness of 500 $\mu$m, and was then dried for 15 hours at room temperature (25°C), 6 hours at 80°C, and 20 minutes at 120°C, thus forming a film. Using this film, the tensile elongation was measured in accordance with JIS A6021, and this value was reported as the film elongation.

<Oxygen Gas Barrier Property>

The oxygen gas barrier property was evaluated by measuring the oxygen permeability under an atmosphere at a temperature of 20°C and a relative humidity of 85%, using an oxygen barrier measurement device (OX-TRAN 2/20) manufactured by Mocon, Inc. Using the measured results for the oxygen permeability of the gas barrier laminate and the substrate, the oxygen permeability of the formed layers comprising the gas barrier layer (II) and the overcoat layer (III) was calculated using the following formula.

$$1/P_{total} = 1/P_I + 1/P_{II+III}$$

In this formula,

P_{total} (a measured value) : the oxygen permeability of the gas barrier laminate (the laminated film)
P_I (a measured value) : the oxygen permeability of the plastic substrate (I)
P_{II+III} (a calculated value) : the oxygen permeability of the formed layers comprising the gas barrier layer (II) and the overcoat layer (III)

<Lamination Strength>

A test piece with dimensions of length: 100 mm x width: 15 mm was prepared from the obtained laminated product, and the lamination strength (X) was measured at a peel speed of 300 mm/minute using a T-type peel test, under conditions including a temperature of 20°C and a relative humidity of 65%.
This laminated product was treated by immersion for 30 minutes in a hot water tank at 95°C, the lamination strength (Y) was then measured in a similar manner, and the ratio (Y)/(X) was determined.

<Example 1>

A PVA (Poval 105, manufactured by Kuraray Co., Ltd., (polyvinyl saponification degree: 98 to 99%, average polymerization degree: 500) was dissolved in hot water, and then cooled to room temperature, thus forming a PVA aqueous solution. An EMA (weight average molecular weight: 100,000, maleic acid units: 45 to 50%) was dissolved in water, and an EMA aqueous solution was prepared by adding sufficient sodium hydroxide to neutralize 10 mol% of the carboxyl groups.
The PVA aqueous solution and EMA aqueous solution were mixed together in quantities that yielded a solid fraction mass ratio of PVA to EMA of 30/70, thus yielding a gas barrier layer-forming coating material (C) with a solid fraction of 10% by mass.
Using a biaxially stretched nylon film (Emblem ON, manufactured by Unitika, Ltd., thickness: 15 $\mu$m) as the plastic substrate (I), the above gas barrier layer-forming coating material (C) was applied to the nylon film using a bar coater No. 4, was subsequently dried for 2 minutes at 80°C using a hot-air dryer, and was then subjected to further drying and a heat treatment for 20 seconds at 200°C using a hot-air dryer, thus forming a coating (a gas barrier layer (II)) with a thickness of approximately 0.5 $\mu$m.
Using an aqueous dispersion of a polyurethane resin with a film elongation of 640% (Superflex 470, manufactured by Dai-ichi Kogyo Seiyaku Co., Ltd.), and a polyisocyanate compound (HW-100, manufactured by BASF Corporation) as a cross-linking agent, these components were mixed together using the blend ratio shown in Table 1, thus yielding a polyurethane-based coating material with a solid fraction concentration of 10% by mass. To this coating material was added a predetermined quantity of a metal salt shown in Table 1 (lithium hydroxide), thereby forming an overcoat layer-forming coating material (F-1).
The overcoat layer-forming coating material (F-1) was applied to the surface of the above gas barrier layer (II) using a bar coater No. 8, was subsequently dried for 2 minutes at 80°C using a hot-air dryer, and was then subjected to further drying and a heat treatment for 1 minute at 130°C using a hot-air dryer, thus forming a coating (an overcoat layer (III)) with a thickness of approximately 1.0 $\mu$m, and yielding a gas barrier laminate with layers laminated in the order (I) (II) (III). The oxygen gas permeability of this gas barrier laminate was measured.
A dry laminator was used to coat the surface of layer (III) of the gas barrier laminate with a sufficient quantity of a coating agent (a mixture of products manufactured by Mitsui Takeda Chemical Co., Ltd., in which Takelac A515 / Takenate A50 is equal to 10/1 (mass ratio)) to form a dried film thickness of 3 $\mu$m, thus forming a laminate adhesive layer (IV). This adhesive layer (IV) was then bonded to a heat seal layer (V) (LLDPE, TUX-FCD manufactured by Tohcello Co., Ltd., thickness: 50 $\mu$m), and aging was conducted for 3 days at 40°C, thereby curing the adhesive layer (IV) and generating a laminated product in which the layers were laminated in the order (I) (II) (III) (IV) (V). The lamination strength of this laminated product was measured.

<Examples 2 to 16, Comparative Examples 1 to 5>

With the exception of altering the composition of the overcoat layer-forming coating material (F) as shown in Table 1, gas barrier laminates and laminated products were prepared in the same manner as the example 1. The resins used were all polyurethane resins (from the Superflex series, manufactured by Dai-ichi Kogyo Seiyaku Co., Ltd.).

<Example 17>

With the exception of altering the metal salt to a zinc oxide aqueous dispersion (ZW-143, manufactured by Sumitomo Osaka Cement Co., Ltd.), a gas barrier laminate and a laminated product were obtained in the same manner as the example 15.

<Example 18>

Vylon 630 (a polyester polyol resin, manufactured by Toyobo Co., Ltd., Tg: 7°C, number average molecular weight: 23,000) was added to a solvent comprising toluene/MEK = 8/2 (mass ratio), and the resulting mixture was stirred and heated for 1 hour at 80°C, yielding a resin solution with a solid fraction of 30% by mass. This Vylon 630 resin solution and a polyisocyanate (BXX4773, manufactured by Toyo Ink Mfg. Co., Ltd.) as a cross-linking agent were mixed together using the blend ratio shown in Table 1, a 1% by mass ethyl acetate solution of dioctyltin laurate (STAN SNT-1F, manufactured by Sankyo Organic Chemicals Co., Ltd.) was added as a catalyst, and toluene was also added, yielding a polyester-based coating material with a solid fraction concentration of 10% by mass.
To a suspended toluene solution of a magnesium oxide powder (average particle size: 3.5 $\mu$m, crystallite diameter: 0.01 $\mu$m, BET specific surface area: 145 m$^2$/g) was added sufficient quantity of a dispersant (decaglycerol oleic acid ester, HLB = 7) to provide 25 parts by mass per 100 parts by mass of the magnesium oxide, and following stirring with a stirrer, the mixture was dispersed using a beads mill. The resulting magnesium oxide dispersed solution with a solid fraction of 20% by mass was added to the above coating material in a quantity (a solid fraction quantity) shown in Table 1, thereby forming an overcoat layer-forming coating material (F-2).
With the exception of using the overcoat layer-forming coating material (F-2) instead of the overcoat layer-forming coating material (F-1) from the example 1, a gas barrier laminate and a laminated product were obtained in the same manner as the example 1.

<Example 19>

With the exception of using a calcium hydroxide dispersed solution prepared using a calcium hydroxide powder (average particle size: 3 to 8 $\mu$m, BET specific surface area: 20 m$^2$/g) instead of the magnesium oxide powder of the example 18, a gas barrier laminate and a laminated product were obtained in the same manner as the example 18.

<Examples 20 and 21, Comparative Example 6>

With the exception of altering the polyester resin as shown in Table 1, gas barrier laminates and laminated products were obtained in the same manner as the example 18. The resins used were all polyester polyol resins (from the Vylon series, manufactured by Toyobo Co., Ltd.), as listed below.
Vylon GK-140 (Tg: 20°C, number average molecular weight: 13,000)
Vylon GK-590 (Tg: 15°C, number average molecular weight: 7,000)
Vylon 200 (Tg: 67°C, number average molecular weight: 17,000)

<Example 22>

An aqueous ink (Aquaecol white ink, manufactured by Toyo Ink Mfg. Co., Ltd.) was printed onto the surface of the gas barrier laminate obtained in the example 18 using a bar coater No. 4, and was then dried for 30 seconds at 50°C using a hot-air dryer, thereby yielding a gas barrier laminate having a printing ink layer.
Using the same technique as the example 1, a laminate adhesive layer (IV) and a heat seal layer (V) were formed on top of the printing ink layer of this gas barrier laminate having a printing ink layer, thereby yielding a laminated product with the layers laminated in the order (I) (II) (III) (printing ink layer) (IV) (V).
The results of measuring the film elongation of the resins used in the examples and comparative examples, the oxygen gas permeability for each of the prepared gas barrier laminates, and the lamination strength for each of the laminated products are shown in Table 1.
[Table 1]

| | Overcoat layer-forming coating material (F) | | | | | Oxygen gas permeability (ml/m2·day·MPa) | | Laminated product | | |
| | Resin | | Resin /cross-linking agent | Metal compound (D), (E) | | Laminate (Ptotal) | Gas barrier layer (II) + overcoat layer (III) (PII+III) | Lamination strength (N/cm) | | Lamination strength ratio |
| | Name | Film elongation (%) | Mass ratio (Note 1) | Name | Parts by mass (Note 2) | | | Before treatment (X) | After treatment (Y) | (Y/X) |
|---|---|---|---|---|---|---|---|---|---|---|
| Example 1 | Superflex 470 | 640 | 70/30 | LiOH | 5 | 18.6 | 19.5 | 4 | 3.4 | 0.85 |
| Example 2 | | | 70/30 | | 5 | 30.3 | 32.8 | 4.4 | 4 | 0.91 |
| Example 3 | | | 70/30 | | 15 | 24.6 | 26.2 | 4.1 | 3.7 | 0.9 |
| Example 4 | | | 70/30 | Li2CO3 | 5 | 110 | 152 | 4.3 | 4.2 | 0.98 |
| Example 5 | | | 70/30 | | 15 | 90.7 | 117 | 4.4 | 3.9 | 0.89 |
| Example 6 | | | 70/30 | | 50 | 66.1 | 79.2 | 4.3 | 3.4 | 0.79 |
| Example 7 | | | 70/30 | MgO | 50 | 50.5 | 57.8 | 4.1 | 3.3 | 0.8 |
| Example 8 | | | 70/30 | ZnO | 50 | 137 | 208 | 4 | 3.2 | 0.8 |
| Example 9 | | | 70/30 | | 100 | 80.3 | 100 | 3.9 | 2.7 | 0.69 |
| Example 10 | | | 70/30 | Li2CO3+ CaCO3 | 15 + 15 | 14.4 | 14.9 | 4.4 | 3.5 | 0.8 |

EP 1 930 155 B1

(continued)

| | Overcoat layer-forming coating material (F) | | | | | Oxygen gas permeability (ml/m2·day·MPa) | | Laminated product | | |
| | Resin | | Resin /cross-linking agent | Metal compound (D), (E) | | Laminate (Ptotal) | Gas barrier layer (II) + overcoat layer (III) (PII+III) | Lamination strength (N/cm) | | Lamination strength ratio |
| | Name | Film elongation (%) | Mass ratio (Note 1) | Name | Parts by mass (Note 2) | | | Before treatment (X) | After treatment (Y) | (Y/X) |
|---|---|---|---|---|---|---|---|---|---|---|
| Example 11 | Superflex 460 | 750 | 70/30 | ZnO | 100 | 79.1 | 98.6 | 4.1 | 2.4 | 0.59 |
| Example 12 | Superflex 460S | 900 | 70/30 | | 100 | 75.7 | 93.4 | 4.4 | 2.5 | 0.59 |
| Example 13 | Superflex 420 | 290 | 70/30 | | 100 | 85.4 | 109 | 3.4 | 1.6 | 0.47 |
| Example 14 | | | 95/5 | | 100 | 105 | 142 | 3.3 | 1.1 | 0.33 |
| Example 15 | | | 50/50 | | 100 | 76.3 | 94.3 | 3.6 | 1.3 | 0.36 |
| Example 16 | | | 100/300 | | 100 | 64.2 | 76.5 | 3.3 | 1.3 | 0.39 |
| Example 17 | | | 50/50 | ZnO Dispersion | 100 | 58.2 | 68.1 | 3 | 1.3 | 0.43 |
| Example 18 | Vylon 630 | 800 | 70/30 | MgO Dispersion | 50 | 72.4 | 88.4 | 6.1 | 6 | 0.98 |
| Example 19 | | | 70/30 | Ca(OH)2 Dispersion | 50 | 67.7 | 81.5 | 5.7 | 5.5 | 0.96 |
| Example 20 | Vylon GK-140 | 450 | 70/30 | MgO Dispersion | 50 | 67.8 | 81.6 | 5.1 | 4.8 | 0.94 |
| Example 21 | Vylon GK-590 | 930 | 70/30 | | 50 | 83.9 | 106.2 | 5.7 | 5.3 | 0.93 |
| Example 22 (Note 3) | Vylon 630 | 800 | 70/30 | | 50 | 78.1 | 97 | 5.4 | 4.9 | 0.91 |

EP 1 930 155 B1

19

| | Overcoat layer-forming coating material (F) | | | | | Oxygen gas permeability (ml/m2·day·MPa) | | Laminated product | | |
|---|---|---|---|---|---|---|---|---|---|---|
| | Resin | | Resin /cross-linking agent | Metal compound (D), (E) | | Laminate (Ptotal) | Gas barrier layer (II) + overcoat layer (III) (PII+III) | Lamination strength (N/cm) | | Lamination strength ratio |
| | Name | Film elongation (%) | Mass ratio (Note 1) | Name | Parts by mass (Note 2) | | | Before treatment (X) | After treatment (Y) | (Y/X) |
| Comparative example 1 | Superflex F8582D | 5 | 70/30 | Li2CO3 | 5 | 31.3 | 34 | 0.1 | 0.1 | 1 |
| Comparative example 2 | Superflex 600 | 170 | 70/30 | | 5 | 28.1 | 30.2 | 1.1 | 0.2 | 0.18 |
| Comparative example 3 | Superflex 410 | 250 | 70/30 | | 5 | 36.8 | 40.5 | 1.4 | 0.3 | 0.21 |
| Comparative example 4 | Superflex 370 | 1300 | 70/30 | | 5 | 25.6 | 27.4 | 3.4 | 1 | 0.29 |
| Comparative example 5 | Superflex 410 | 250 | 70/30 | - | 0 | 201 | 404 | 3.6 | 2.4 | 0.67 |
| Comparative example 6 | Vylon 200 | 3 | 70/30 | MgO Dispersion | 50 | 91.6 | 118.8 | 0.7 | 0.7 | 1 |

(Note 1): Solid fraction ratio between resin and cross-linking agent.

(Note 2): Quantity (or solid fraction quantity in the case of a dispersion) relative to 100 parts by mass of the combined solid fraction of resin and cross-linking agent.

(Note 3): Only the laminated product of the example 22 includes a printing ink layer.

The gas barrier laminates obtained in the above examples all exhibited favorable gas barrier properties, and all yielded a laminated product with superior lamination strength. In contrast, in the comparative examples 1 to 4, and the comparative example 6, although the gas barrier properties for each of the prepared laminates were favorable, satisfactory lamination strength could not be obtained when a laminated product was formed. In the comparative example 5, because the coating material (F) contained no metal compound, there was no loss in the lamination strength of the laminated product, but the gas barrier properties of the laminate were inferior.

## Claims

1. A gas barrier laminate comprising:

   a plastic substrate (I);
   a gas barrier layer (II) formed from a gas barrier layer-forming coating material (C) containing a polyalcohol-based polymer (A) and a polycarboxylic acid-based polymer (B), wherein the polyalcohol-based polymer (A) comprises polyvinyl alcohol and the polycarboxylic acid-based polymer (B) comprises an ethylene-maleic acid copolymer; and
   an overcoat layer (III) formed from an overcoat layer-forming coating material (F) containing at least one of a monovalent metal compound (D) and a bivalent or higher metal compound (E) and a resin contained within the overcoat layer forming coating material (F) having a film elongation of at least 251 % and less than 1,300% measured in accordance with JIS A6021; wherein
   the gas barrier layer (II) is laminated to the plastic substrate (I), either directly or with an anchor coat layer disposed therebetween, the overcoat layer (III) is laminated on top of the gas barrier layer (II), and
   when a laminated product is prepared by laminating a laminate adhesive layer (IV) and a heat seal layer (V), in that order, to either the overcoat layer (III) or the plastic substrate (I) of the gas barrier laminate, either directly or with a printing ink layer disposed therebetween, a lamination strength (X) of the laminated product is not less than 1 N/cm, and a ratio of a lamination strength (Y) following a hot water treatment for 30 minutes at 95°C relative to the lamination strength (X) (namely, Y/X) is not less than 0.3.

2. The gas barrier laminate according to claim 1, wherein the overcoat layer (III) comprises a polyester polyol with a glass transition temperature of not more than 70°C, and a polyisocyanate.

3. The gas barrier laminate according to claim 1 or 2, wherein the bivalent or higher metal compound (E) comprises at least one of a hydroxide, oxide and carbonate of at least one metal selected from the group consisting of Mg and Ca.

4. The gas barrier laminate according to claim 3, wherein the bivalent or higher metal compound (E) is dispersed within the overcoat layer-forming coating material (F) using a dispersant (H).

5. A laminated product, comprising:

   the gas barrier laminate according to any one of claims 1 through 4;
   a laminate adhesive layer (IV); and
   a heat seal layer (V); wherein
   the laminate adhesive layer (IV) is laminated to either the overcoat layer (III) or the plastic substrate (I) of the gas barrier laminate, either directly or with a printing ink layer disposed therebetween, and the heat seal layer (V) is laminated to the top of the laminate adhesive layer (IV).

6. A packaging material comprising the gas barrier laminate according to any one of claims 1 through 4.

## Patentansprüche

1. Gas-Barriere-Laminat, umfassend

   - ein Kunststoff-Substrat (I);
   - eine Gas-Barriere-Schicht (II), die aus einem eine Gas-Barriere-Schicht bildenden Beschichtungs-Material (C) gebildet ist, das ein Polymer (A) auf Polyalkohol-Basis und ein Polymer (B) auf Polycarbonsäure-Basis enthält, worin das Polymer (A) auf Polyalkohol-Basis Polyvinylalkohol umfaßt und das Polymer (B) auf Polycarbonsäure-Basis ein Ethylen-Maleinsäure-Copolymer umfaßt; und
- eine Überzugs-Schicht (III), die aus einem eine Überzugs-Schicht bildenden Beschichtungs-Material (F) gebildet ist, das wenigstens eine Verbindung aus der Gruppe Verbindung (D) eines einwertigen Metalls und Verbindung (E) eines zweiwertigen oder höherwertigen Metalls enthält, und ein Harz, das in dem die Überzugs-Schicht bildenden Beschichtungs-Material (F) enthalten ist und eine Film-Längung von wenigstens 251 % und weniger als 1.300 % aufweist, gemessen in Übereinstimmung mit JIS A6021; worin
- die Gas-Barriere-Schicht (II) auf das Kunststoff-Substrat (I) laminiert ist, und zwar entweder direkt oder mit einer dazwischen angeordneten Anker-Beschichtungs-Schicht, und die Überzugs-Schicht (III) oben auf die Gas-Barriere-Schicht (II) laminiert ist; und worin
- dann, wenn ein laminiertes Produkt hergestellt wird durch Auflaminieren einer Laminat-Kleber-Schicht (IV) und einer Heiß-Siegel-Schicht (V) - in der genannten Reihenfolge - entweder auf die Überzugs-Schicht (III) oder das Kunststoff-Substrat (I) des Gas-Barriere-Laminats, und zwar entweder direkt oder mit einer dazwischen angeordneten Drucktinten-Schicht, die Laminations-Festigkeit (X) des laminierten Produktes nicht geringer ist als 1 N/cm, und das Verhältnis der Laminations-Festigkeit (Y) im Anschluß an eine Heißwasser-Behandlung für 30 Minuten bei 95 °C, relativ zur Laminations-Festigkeit (X), also (Y/X), nicht geringer ist als 0,3.

2. Gas-Barriere-Laminat nach Anspruch 1, worin die Überzugs-Schicht (III) ein Polyesterpolyol mit einer Glasübergangstemperatur von nicht mehr als 70 °C und ein Polyisocyanat umfaßt.

3. Gas-Barriere-Laminat nach Anspruch 1 oder 2, worin die Verbindung (E) des zweiwertigen oder höherwertigen Metalls wenigstens eine Verbindung aus der Gruppe Hydroxid, Oxid und Carbonat wenigstens eines Metalls umfaßt, das gewählt ist aus der Gruppe, die besteht aus Mg und Ca.

4. Gas-Barriere-Laminat nach Anspruch 3, worin die Verbindung (E) des zweiwertigen oder höherwertigen Metalls in dem die Überzugs-Schicht bildenden Beschichtungs-Material (F) unter Verwendung eines Dispergiermittels (H) dispergiert ist.

5. Laminiertes Produkt, umfassend:

- das Gas-Barriere-Laminat nach irgendeinem der Ansprüche 1 bis 4;
- eine Laminat-Kleber-Schicht (IV); und
- eine Heißsiegel-Schicht (V); worin
- die Laminat-Kleber-Schicht (IV) auf entweder die Überzugs-Schicht (III) oder das Kunststoff-Substrat (I) des Gas-Barriere-Laminats laminiert ist, und zwar entweder direkt oder mit einer dazwischen angeordneten Drucktinten-Schicht, und die Heißsiegel-Schicht (V) oben auf die Laminat-Kleber-Schicht (IV) laminiert ist.

6. Verpackungs-Material, umfassend das Gas-Barriere-Laminat nach irgendeinem der Ansprüche 1 bis 4.

**Revendications**

1. Stratifié formant barrière aux gaz comprenant :

un substrat en matière plastique (I) ;
une couche formant barrière aux gaz (II) formée à partir d'un matériau de revêtement formant couche formant barrière aux gaz (C) contenant un polymère à base de polyalcool (A) et un polymère à base de poly(acide carboxylique) (B), dans lequel le polymère à base de polyalcool (A) comprend du poly(alcool de vinyle) et le polymère à base de poly(acide carboxylique) (B) comprend un copolymère d'éthylène-acide maléique ; et
une couche de finition (III) formée sur un matériau de revêtement formant couche de finition (F) contenant au moins un composé métallique monovalent (D) et un composé métallique bivalent ou supérieur (E) et une résine contenue à l'intérieur du matériau de revêtement formant couche de finition (F) ayant un allongement de film d'au moins 251 % et inférieur à 1 300 % mesuré conformément à la norme JIS A6021 ; dans lequel
la couche formant barrière aux gaz (II) est stratifiée sur le substrat en matière plastique (I), soit directement soit avec une couche de revêtement d'ancrage disposée entre les deux, la couche de finition (III) est stratifiée sur le dessus de la couche formant barrière aux gaz (II), et
lorsqu'un produit stratifié est préparé par stratification d'une couche adhésive stratifiée (IV) et d'une couche d'étanchéité thermique (V), dans cet ordre, soit sur la couche de finition (III) soit sur le substrat en matière plastique (I) du stratifié formant barrière aux gaz, soit directement soit avec une couche d'encre d'impression disposée entre les deux, une force de stratification (X) du produit stratifié n'est pas inférieure à 1 N/cm et un rapport d'une force de stratification (Y) suivant un traitement à l'eau chaude durant 30 minutes à 95°C par rapport à la force de stratification (X à savoir Y/X) n'est pas inférieur à 0,3.

**2.** Stratifié formant barrière aux gaz selon la revendication 1, dans lequel la couche de finition (III) comprend un polyester polyol avec une température de transition vitreuse de pas plus de 70°C, et un polyisocyanate.

**3.** Stratifié formant barrière aux gaz selon la revendication 1 ou 2, dans lequel le composé métallique bivalent ou supérieur (E) comprend au moins un hydroxyde, un oxyde et un carbonate d'au moins un métal choisi parmi le groupe constitué de Mg et Ca.

**4.** Stratifié formant barrière aux gaz selon la revendication 3, dans lequel le composé métallique bivalent ou supérieur (E) est dispersé à l'intérieur du matériau de revêtement formant couche de finition (F) en utilisant un dispersant (H).

**5.** Produit stratifié comprenant :

le stratifié formant barrière aux gaz selon l'une quelconque des revendications 1 à 4;
une couche adhésive stratifiée (IV) ; et
une couche d'étanchéité thermique (V) ; dans lequel
la couche adhésive stratifiée (IV) est stratifiée soit sur la couche de finition (III) soit sur le substrat en matière plastique (I) du stratifié formant barrière aux gaz,
soit directement soit avec une couche d'encre d'impression disposée entre les deux, et la couche d'étanchéité thermique (V) est stratifiée sur le dessus de la couche adhésive stratifiée (IV).

**6.** Matériau d'emballage comprenant le stratifié formant barrière aux gaz selon l'une quelconque des revendications 1 à 4.

**EP 1 930 155 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1086981 A1
- EP 1548074 A2
- JP 2004322625 A
- US 2003124365 A1
- JP 2004315586 A
- JP 2004136281 A
- JP H06220221 B
- JP H07102083 B
- JP H07205379 B
- JP H07266441 B
- JP H08041218 B
- JP H10237180 B
- JP 2000000931 A
- JP 2001323204 A
- JP 2002020677 A
- JP 2002241671 A
- JP 2004115776 A
- JP 2004137495 A
- JP 2004322626 A
- JP H02149415 B